# EUROPEAN PATENT SPECIFICATION

(11) **EP 2 305 987 B1**
(45) Date of publication and mention of the grant of the patent: **23.10.2013**
(21) Application number: 10174242.7
(22) Date of filing: 27.08.2010
(51) Int. Cl.: F02D 11/00, F02D 11/02, F02D 11/10, B60K 26/02

(54) **Accelerator reaction force control apparatus**
Vorrichtung zur Steuerung der Gaspedalreaktionskraft
Appareil de contrôle de la force de réaction d'accélérateur

(30) Priority: 18.09.2009 JP 2009216757
(43) Date of publication of application: 06.04.2011
(73) Proprietor: Nissan Motor Co., Ltd., Kanagawa 221-0023 (JP)
(72) Inventor: Omori, Masahiro, Kanagawa 243-0123 (JP); Sakaguchi, Shigeyuki, Kanagawa 243-0123 (JP); Shiomi, Masao, Kanagawa 243-0123 (JP)
(74) Representative: Grünecker, Kinkeldey, Stockmair & Schwanhäusser

(56) References cited:
- DE-A1-102004 002 179
- US-A1- 2003 172 906
- US-A1- 2005 145 058
- US-A1- 2008 169 145

## Description

### BACKGROUND

### Field of the Invention

The present invention generally relates to an accelerator reaction force control apparatus for controlling a reaction force of an accelerator pedal of a vehicle. Background Information

An accelerator reaction force control apparatus have been proposed for controlling an operating force (depression reaction force) of an accelerator pedal of a vehicle. An example of such an accelerator pedal reaction force control apparatus is disclosed in Japanese Laid-Open Patent Publication No. 2003-120339. This publication discloses greatly increasing an accelerator reaction force (depression reaction force) to suppress further depression of the accelerator pedal immediately before the vehicle changes from a low rotational speed/low load operating region where the fuel efficiency is high to a high-rotational speed/high load operating region where the fuel efficiency is low due to an increasing depression amount (position) of the accelerator pedal.

### SUMMARY

An accelerator pedal is one example of an operating member enabling a driver to control the speed of a vehicle as desired. The driver operating feel of the accelerator pedal and the effect that the operating feel of the accelerator pedal has on the drivability of the vehicle are significant because they are directly related to how the quality of the vehicle as a whole is evaluated by the driver. Therefore, when attempting to achieve an accelerator operation force control apparatus that can contribute to reducing fuel consumption in actual practice, it is necessary to strike a fine balance between reducing fuel consumption, obtaining good accelerator pedal operating feel, and providing good vehicle operability.

Meanwhile, some vehicles are equipped with a vehicle automatic speed limiter (ASL) that can be used in addition to cruise control system. The automatic speed limiter (ASL) is a feature that can be used by the driver to select a maximum vehicle speed limit. The automatic speed limiter functions by limiting, for example, a throttle opening degree, and thereby, limiting an engine output irrespective of a depression amount of an accelerator pedal. When the automatic speed limiter has been set, the throttle will respond to the driver's demand until the set limit is reached. At this point, provided the throttle position is sustained, the vehicle will maintain the set speed. The automatic speed limiter can be cancelled by either switching to cruise control, applying kick-down on the accelerator pedal or by pushing the cancel button. Such an apparatus serves to prevent traffic accidents caused by excessive speed.

If a reaction force limiting apparatus such as the in Japanese Laid-Open Patent Publication No. 2003-120339 is employed in a vehicle that is equipped with an automatic speed limiter and the accelerator pedal reaction force is increased based on an accelerator pedal position, then there is a possibility that the automatic speed limiter will limit the throttle opening degree and the accelerator pedal reaction force will increase even though the vehicle is transitioning to a low rotational speed/load load operating region where the fuel efficiency is high. Consequently, there is a possibility that the driver operating feel of the accelerator pedal will be degraded.

In view of the state of the known technology, the present disclosure is directed to an accelerator reaction force control apparatus that is configured to control an engine output based on an accelerator pedal position and to increase a reaction force of the accelerator beyond a base operation force when the accelerator position becomes equal to or larger than a prescribed position threshold value.

The accelerator reaction force control apparatus according to the present disclosure is configured to alleviate the problem of the accelerator pedal reaction force being unnecessarily increased when the vehicle is transitioning to a low rotational speed/low load operating region where the fuel efficiency is high due to the engine output being limited irrespective of the accelerator pedal position by, for example, an automatic speed limiter while the accelerator pedal reaction force is being increased. In other words, in a first aspect of the present disclosure, if a prescribed condition that limits an engine output occurs, increasing a reaction force of the accelerator pedal is prohibited.

According to one embodiment, an accelerator force control apparatus is provided that basically comprising accelerator position detecting means or device, engine output control means or device, reaction force varying means or device and reaction force increase prohibiting means or device. The accelerator position detecting means or device is configured to detect an accelerator position. The engine output control means or device is configured to control an engine output in accordance with the accelerator position. The reaction force varying means or device is configured to vary a reaction force of an accelerator by increasing the reaction force of the accelerator beyond a base reaction force when the accelerator position is equal to or larger than a prescribed position threshold value. The reaction force increase prohibiting means or device is configured to prohibit an increase of the reaction force of the accelerator when a prescribed condition for limiting the engine output is satisfied regardless of the accelerator position.

### BRIEF DESCRIPTION OF THE DRAWINGS

Referring now to the attached drawings which form a part of this original disclosure:

Figure 1 is a simplified schematic view showing a system configuration and a reaction force changing mechanism of an accelerator pedal reaction force control apparatus according to one illustrated embodiment;

Figure 2 is a simple schematic view of a reaction force changing mechanism according to the illustrated embodiment;

Figure 3 is a characteristic diagram illustrating an accelerator pedal reaction force characteristic according to the illustrated embodiment;

Figure 4 is a flowchart illustrating processing steps executed by an accelerator pedal reaction force control of a control unit according to the illustrated embodiment; and

Figure 5 is a time chart illustrating a situation in which an accelerator pedal reaction force control is utilized according to the illustrated embodiment.

### DETAILED DESCRIPTION OF EMBODIMENTS

Selected embodiments will now be explained with reference to the drawings. It will be apparent to those skilled in the art from this disclosure that the following descriptions of the embodiments are provided for illustration only and not for the purpose of limiting the invention as defined by the appended claims and their equivalents.

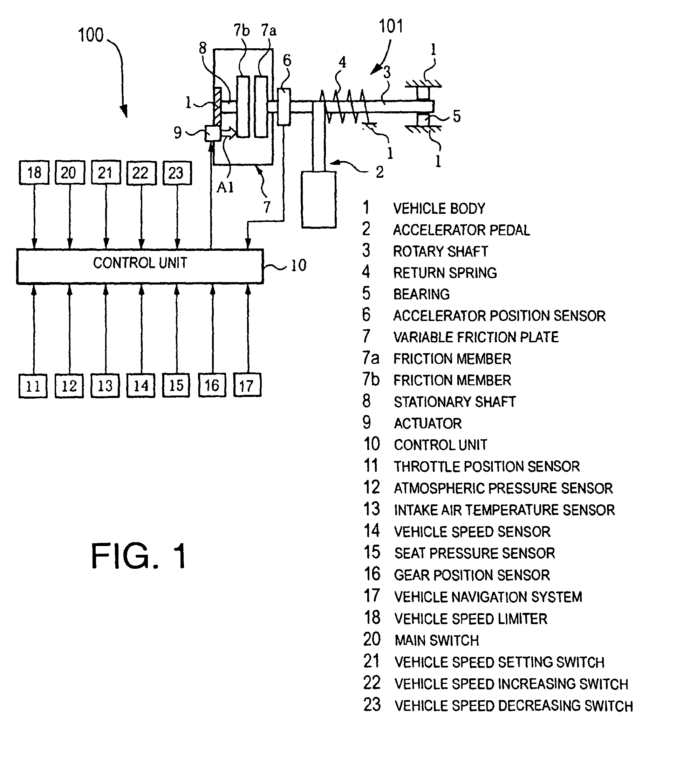

Referring initially to Figure 1, a schematic system diagram of an accelerator reaction force control apparatus 100 is illustrated in accordance with one embodiment. The accelerator reaction force control apparatus 100 is basically configured to variably control a reaction force (operating force) of an accelerator pedal 2 provided in a vehicle body 1 of a vehicle. While the terms "accelerator" and "accelerator pedal" are used throughout this description and the following claims, it should be understood from this disclosure that such terms should not be limited to any particular embodiment or type of input device. In particular, while a "pedal" inside the passenger compartment is described, it should be understood from this disclosure that the "accelerator" can be a device in the engine compartment responsive to electrical, hydraulic or mechanical signals produced by a pedal (or other input device) in the passenger compartment. Additionally, while the device in the passenger compartment is described as a pedal, it should be understood from this disclosure that various other regulating devices (e.g., levers, switches, buttons, etc.) can be used as an "accelerator" or as devices that signal an "accelerator."

As explained below, the accelerator reaction force control apparatus 100 detects a position (depression amount) of the accelerator pedal 2 and changing a reaction force of the accelerator pedal 2 from a base reaction force. In other words, the accelerator reaction force control apparatus 100 is configured to variably control a reaction force (operating force) of the accelerator pedal 2 provided in the vehicle body 1. The accelerator reaction force control apparatus 100 includes an accelerator position detecting means or device for detecting an accelerator position (depression amount) of the accelerator pedal 2 and a reaction force varying means or device for varying a reaction force of the accelerator pedal 2 from a base reaction force. Basically, the accelerator reaction force control apparatus 100 is configured to increase the reaction force of the accelerator pedal 2 beyond the base reaction force when the position of the accelerator pedal 2 is equal to or larger than a prescribed position threshold value α.

As will be explained later, the accelerator reaction force control apparatus 100 is configured to increase the reaction force of the accelerator pedal 2 beyond the base reaction force when the vehicle is in an operating region where the accelerator position will become equal to or larger than a position threshold value when a driver depresses the accelerator pedal 2. In this way, excessive depression of the accelerator pedal 2 can be suppressed and the fuel consumption of the vehicle can be reduced. Thus, increasing of the reaction force of the accelerator pedal 2 is prohibited under a prescribed condition in which an engine output is limited by, for example, an automatic speed limiter (ASL) that limits a vehicle speed by limiting a throttle position (e.g., a throttle opening degree) irrespective of the accelerator position. Consequently, the reaction force of the accelerator pedal 2 is prevented from being unnecessarily increased when the engine output is being limited such that the engine is transitioning to a low rotational speed/low load operating region where the fuel efficiency is already high. As a result, the fuel consumption of the vehicle can be reduced while also achieving good accelerator pedal operating feel and good vehicle drivability.

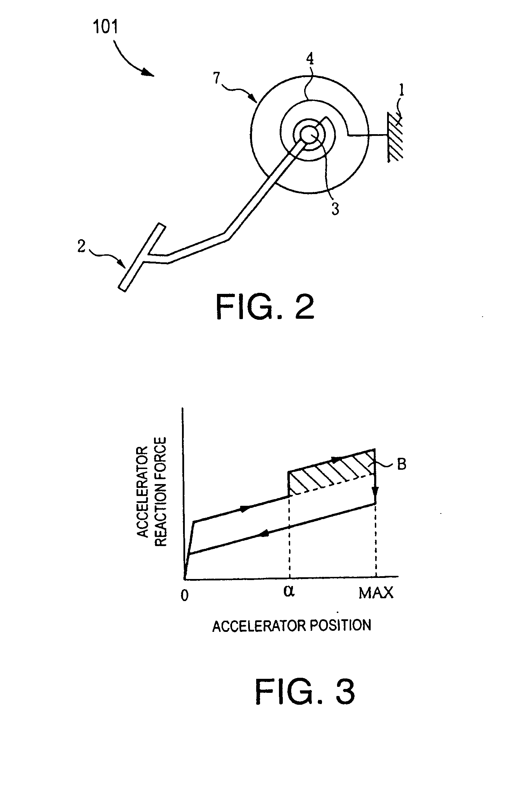

As shown in Figures 1 and 2, the accelerator pedal 2 is provided on a rotating shaft 3 such that the accelerator pedal 2 pivots about a center axis of the rotating shaft 3. A return spring 4 serves to apply a force (reaction force) against the accelerator pedal 2 in a direction of closing a throttle valve (decreasing accelerator position or a depression amount in the case of a pedal). One end of the return spring 4 is fixed to the vehicle body 1, while the other end is fixed to the rotating shaft 3. Each end of the rotating shaft 3 is rotatably supported on the vehicle body 1 with a bearing 5 and an accelerator position sensor 6 is provided near the other end of the rotating shaft 3. The accelerator position sensor 6 serves as an accelerator position detecting means or device and outputs an accelerator position signal APS.

In this embodiment, the operation or depression amount (position) of the accelerator pedal 2 and an opening degree of a throttle valve (not shown) of an internal combustion engine (not shown) are linked such that the opening degree of the throttle valve increases and decreases in accordance with the depression amount of the accelerator pedal 2. Basically, a fuel injection amount (and, thus, a fuel consumption amount) increases and decreases according in accordance with the accelerator position.

As shown in Figures 1 and 2, a sketch of a reaction-force changing mechanism 101 is illustrated as one example of a reaction force varying means or device for varying a reaction force of the accelerator pedal 2 from the base reaction force. In the illustrated embodiment, the reaction-force changing mechanism 101 includes a variable friction plate 7 having a pair of friction members 7a and 7b arranged facing opposite each other and configured to apply a frictional force against rotation of the rotating shaft 3. One of the friction members 7a is mechanically coupled to an end portion of the rotating shaft 3. The other friction member 7b is non-rotatably supported on a stationary shaft 8 with splines or the like such that it can move freely in an axial direction along the stationary shaft 8. The stationary shaft 8 is fixed to the vehicle body 1. Additionally, the reaction-force changing mechanism 101 includes an actuator 9 (e.g., an electromagnetic solenoid) that is fixed to the vehicle body 1 and serves to apply a force against the friction element 7b toward the friction element 7a.

The variable friction plate 7 is configured such that a frictional force between the friction members 7a and 7b is variable controlled by operating the actuator 9 so as to move the friction member 7b in an axial direction (direction indicated with the arrow A1 in Figure 1). The operation of the actuator 9 is controlled by a control unit 10, which constitutes a part of the reaction force varying means or device. Basically, the control unit 10 controls the operation of the actuator 9 for controlling a frictional force that is applied to the rotating shaft 3 by the variable friction plate 7. Thus, the reaction force experienced when the accelerator pedal 2 is operated can be varied by the manner in which the control unit 10 controls the operation of the actuator 9.

In addition to receiving an input signal from the accelerator position sensor 6 (which detects a position of the accelerator pedal 2), the control unit 10 also receives input signals from a throttle position sensor 11, an atmospheric pressure sensor 12, an intake air temperature sensor 13, a vehicle speed sensor 14, a seat pressure sensor 15, a gear position sensor 16, a vehicle navigation system 17 and an automatic speed limiter 18. The throttle position sensor 11 is configured to detect an opening degree of a throttle valve. The atmospheric pressure sensor 12 is configured to detect an ambient atmospheric pressure. The intake air temperature sensor 13 is configured to detect an intake air temperature. The vehicle speed sensor 14 is configured to detect a vehicle speed. The seat pressure sensor 15 is installed in a seat (not shown) of the vehicle. The seat pressure sensor 15 is configured to detect if a passenger is aboard the vehicle. The gear position sensor 16 is configured to detect a gear ratio of a transmission. The vehicle navigation system 17 is configured to acquire a current position of the vehicle and map information regarding a vicinity of the current position. The automatic speed limiter 18 is configured to limit a vehicle speed to a prescribed vehicle speed limit set by a driver.

The control unit 10 constitutes an engine output control means or device. The engine output control means (10) is configured to control a throttle position in accordance with the accelerator position for controlling the engine output. The engine output control of the control unit 10 is a conventional control that is well known in the art. Since engine output controls are well known in the art, the structures associated with the engine output control will not be discussed or illustrated in detail herein. Rather, it will be apparent to those skilled in the art from this disclosure that the engine output control can be any type of structure and/or programming that can be used to carry out the engine output control.

The automatic speed limiter 18 is a feature that can be used by the driver to select a maximum vehicle speed limit. The automatic speed limiter 18 constitutes a vehicle speed limiting means or device for limiting a vehicle speed to be equal to or smaller than a prescribed vehicle speed by limiting a throttle position irrespective of an accelerator position. The automatic speed limiter functions by limiting, for example, a throttle opening degree, and thereby, limiting an engine output irrespective of a depression amount of an accelerator pedal. When the automatic speed limiter has been set, the throttle will respond to the driver's demand until the set limit is reached. At this point, provided the throttle position is sustained, the vehicle will maintain the set speed. The automatic speed limiter 18 can be cancelled by either switching to cruise control, applying kick-down on the accelerator pedal or by pushing the cancel button. Such an apparatus serves to prevent traffic accidents caused by excessive speed.

The automatic speed limiter 18 includes a main switch 20, a vehicle speed setting switch 21, a vehicle speed increasing switch 22 and a vehicle speed decreasing switch 23. These switches 20 to 23 are driver operable switches that a driver can selectively operate as needed and/or desired. The main switch 20 is operated by the driver for turning the automatic speed limiter 18 "on" and "off." The vehicle speed setting switch 21 is operated by the driver for setting a vehicle speed limit V0 to a current vehicle speed. The vehicle speed increasing switch 22 is operated by the driver for increasing the set vehicle speed limit V0. The vehicle speed decreasing switch 23 is operated by the driver for decreasing the set vehicle speed limit V0.

The transmission can be, for example, a continuously variable transmission configured to vary the gear ratio in a continuous manner, an automatic transmission having a torque converter and a step-shifting auxiliary gear changing mechanism, or a manual transmission. In the case of a continuously variable transmission, the gear ratio can be calculated as a ratio of a rotational speed on the input shaft side and a rotational speed on the output shaft side of the transmission.

Figure 3 is a simple characteristic diagram showing a reaction force characteristic of the accelerator pedal 2 according to the embodiment. The accelerator pedal 2 is provided with a basic reaction force that has an appropriate hysteresis with respect to operation of the accelerator pedal 2 in a depression direction (direction of increasing throttle valve opening) and in a release direction (direction of decreasing throttle valve opening). Thus, as indicated in Figure 3, this diagram shows the basic pedal depression force, i.e., a base reaction force of the accelerator pedal 2 increases substantially proportionally to the accelerator position with the appropriate amount of hysteresis existing between an accelerator position increasing direction and an accelerator position decreasing direction. This basic reaction force is called a "base reaction force" of the accelerator. When the accelerator pedal 2 is operated in the direction of increasing throttle valve opening, i.e., depressed, and the accelerator position exceeds a prescribed accelerator position threshold value (with the reference symbol α in Figure 3), the reaction force of the accelerator pedal 2 is increased beyond the depression-side base reaction force in a step-like fashion such that further depression is suppressed. The step-like increase of the accelerator pedal naturally discourages the driver from depressing the accelerator pedal 2 any further and, simultaneously, reliably informs the driver that the vehicle has transitioned from an operating state in which the fuel consumption rate is low (i.e., the fuel efficiency is good) to an operating state in which the fuel consumption rate is high (i.e., the fuel efficiency is poor).

It is acceptable for the increase of the reaction force of the accelerator pedal 2 in the accelerator position increasing direction to be cancelled either immediately after the operating direction of the accelerator pedal 2 changes to the accelerator position decreasing direction or after the accelerator position has decreased to a value smaller than the aforementioned prescribed position.

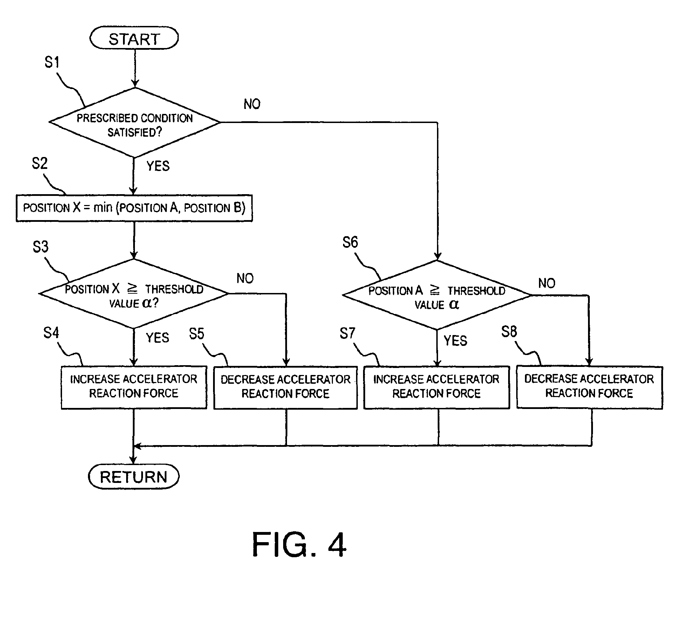

Figure 4 is a flowchart of an accelerator pedal reaction force control according to the embodiment. Basically, in this flowchart, the control unit 10 is configured to control a throttle position B according to an accelerator position A and to increase a reaction force of the accelerator pedal 2 when the accelerator position is equal to or larger than the prescribed position threshold value α. However, if the throttle position B is limited by the control unit 10 to a prescribed position limit B0 by the automatic speed limiter 18 such that the throttle position B falls below the position threshold value α, then the increase of the pedal reaction force is cancelled irrespective of the accelerator position A and the pedal reaction force is decreased to the base reaction force.

In step S1, the control unit 10 determines if a prescribed condition for limiting an engine output irrespective of the accelerator position is satisfied. In other words, the control unit 10 determines if the engine output is being limited even though the accelerator pedal position has exceeded the position threshold value α at which the accelerator pedal reaction force should be increased. Here, in step S1, the engine output can be defined in terms of a throttle position (opening degree), an engine rotational speed, and a fuel injection quantity. In this embodiment, the control unit 10 determines if a vehicle speed limitation is being executed by the automatic speed limiter 18 such that the throttle position is limited irrespective of the accelerator pedal position.

If the automatic speed limiter 18 is not executing a vehicle speed limitation, then the control unit 10 proceeds to step S6 and compares an accelerator position A to the prescribed position threshold value α. It is acceptable for the accelerator position A to be an actual accelerator position detected by the accelerator position sensor 6 or a target value of the throttle position set according to the accelerator position. It is acceptable for the position threshold value α to be a fixed value. However, it is preferable for the position threshold value α to be varied according to the vehicle speed and/or other factors, e.g., increased as the vehicle speed increases.

If the accelerator position A is equal to or larger than the threshold value α, then the control unit proceeds to step S7 where the control unit increases the accelerator pedal reaction force. Meanwhile, if the accelerator position is smaller than the threshold value α, then the control unit 10 proceeds to step S8 where the control unit prohibits increasing of the accelerator pedal reaction force. Thus, if the accelerator pedal reaction force is in being increased, then the increasing of the accelerator position is cancelled and the accelerator pedal reaction force is decreased by an amount equal to the increase.

In step S1, if the control unit 10 determines that the prescribed condition for limiting the engine output is satisfied, i.e., that the automatic speed limiter 18 is executing a vehicle speed limitation, then the control unit 10 proceeds to step S2 where the control unit selects the smaller position X of the accelerator position A and a throttle position B. In this way, the processing of step S1 of the control unit constitutes a position selecting means or device. The accelerator position A is detected, for example, by the accelerator position sensor 6. The throttle position B is detected, for example, by the throttle position sensor 11. The accelerator position A and the throttle position B are values (e.g., percentages) of the same level that can be compared.

In step S3, the smaller position X is compared to the position threshold value α. If the position X is equal to or larger than the threshold value α, then the control unit proceeds to step S4 where the control unit increases the pedal reaction force. Meanwhile, if the smaller position X is smaller than the threshold value α, then the control unit 10 proceeds to step S5 where the control unit prohibits increasing of the pedal reaction force. Additionally, the control unit 10 decreases the pedal reaction force by an amount equal to the increase if the pedal reaction force has already been increased. In this way, the processing of steps S3 and S5 of the control unit constitutes a reaction force increase prohibiting means or device.

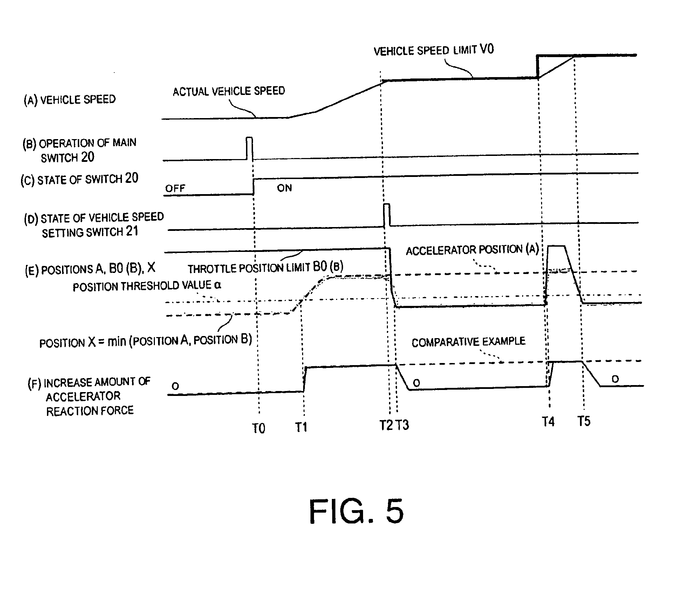

Figure 5 is a time chart for a situation in which a reaction force control according to this embodiment is utilized. In part (E) of Figure 5, the bold-line characteristic curve indicates the position X. The pedal reaction force is increased (at a time T1) when the accelerator position A indicated with a broken-line curve in part (E) of Figure 5 becomes equal to or larger than the position threshold value α indicated with a single dot chain line in part (E) of Figure 5. Meanwhile, the vehicle speed is limited to be equal to or below the set vehicle speed limit V0 when the main switch 20 of the automatic speed limiter 8 has been turned on (at a time T0) and the vehicle speed setting switch 21 has been operated (at a time T2). That is, the throttle position B is limited to be equal to or smaller than a prescribed position limit B0 irrespective of the accelerator position A.

In this embodiment, if the automatic speed limiter 18 limits the vehicle speed to a value equal to or smaller than the vehicle speed limit V0 and thereby causes the throttle position B to decrease below the accelerator position A until the throttle position B (= position X) falls below the prescribed position threshold value α (at a time T3) while the pedal reaction force is being increased, then the increase of the pedal reaction force is cancelled and the pedal reaction force is decreased to the base reaction force. In other words, the increase amount of the pedal reaction force is set to 0 (zero). In this embodiment, the threshold value α used to determine when to cancel the increase of the pedal reaction force has the same value as the position threshold value α used to determine when to start increasing the pedal reaction force. However, it is not necessary to use the same value. For example, it is acceptable to have a threshold value for starting to increase the pedal reaction force and a threshold value to cancel the increase and to provide some hysteresis between the two threshold values.

When the driver operates the vehicle speed increase switch and causes the throttle position B (= position X) to be equal to or larger than the threshold value α (at a time T4), the control unit 10 increases the pedal reaction force with respect to the base reaction force again. When the throttle position B (= position X) is smaller than the threshold value α, the increase of the pedal reaction force is canceled again and the pedal reaction force is decreased toward the base reaction force.

The characteristic curve shown with a broken line in part (F) of Figure 5 illustrates a comparative example that differs from this embodiment in that a pedal reaction force control is executed based on a comparison of the accelerator position A to the threshold value α without taking into consideration a throttle position or other parameter indicating an engine output. With such a comparative example, the pedal reaction force continues to be increased unnecessarily in a situation where the throttle position B is limited by a vehicle speed limiting control irrespective of the size of the accelerator position A and the engine is already transitioning to a low rotational speed/low load operating region where the fuel efficiency is high. Consequently, there is a concern that the accelerator pedal will feel unnecessarily stiff and the operating feel will be degraded.

Conversely, with this embodiment, when the pedal reaction force is increased and the smaller position X of the accelerator position A and the throttle position B has become smaller than the threshold value α during a vehicle speed limiting control executed by the automatic speed limiter 18, the increase of the pedal reaction force is cancelled and the pedal reaction force is immediately decreased by an amount equal to the increase amount. As a result, unlike the comparative example, a situation in which the pedal reaction force is unnecessarily increased even though the operating region is transitioning in a direction of improved fuel efficiency does not occur and a pedal reaction force control that is appropriate in consideration of the fuel efficiency can be achieved. Thus, the fuel consumption of the vehicle can be reduced while also achieving good accelerator pedal operating feel and good vehicle drivability.

In the embodiment described above, the prescribed condition for decreasing the engine output while the pedal reaction force is increased is the condition that the vehicle speed is being limited by an automatic speed limiter 18. However, the accelerator reaction force control apparatus 100 can also be used in a similar manner with respect to, for example, a rotational speed limiting control serving as a countermeasure to overheating, a rotational speed limiting control used in a limp home operating mode when vehicle trouble occurs, or some other limiting control that limits an engine rotational speed to a prescribed rotational speed limit.

Although in the previously explained embodiment a throttle position is used as a parameter corresponding to an engine output, it is also acceptable to use an engine rotational speed, a fuel injection quantity, or another parameter related to the engine output.

In the previously described embodiment, the position (depression amount) of the accelerator pedal 2 is detected directly as an accelerator position. Although the depression amount of the accelerator pedal 2 and the accelerator position are essentially the same thing, it is possible to use, for example, a target opening degree of a throttle valve or other value that is linked to the accelerator pedal 2 as the accelerator position.

An accelerator reaction force control apparatus is not limited to vehicles having only an internal combustion engine as a drive source. For example, the accelerator reaction force control apparatus 100 can also be applied to an electric vehicle or a hybrid vehicle.

While only selected embodiments have been chosen to illustrate the present invention, it will be apparent to those skilled in the art from this disclosure that various changes and modifications can be made herein without departing from the scope of the invention as defined in the appended claims. Thus, the foregoing descriptions of the embodiments according to the present invention are provided for illustration only, and not for the purpose of limiting the invention as defined by the appended claims.

## Claims

1. An accelerator reaction force control apparatus (100) comprising:
accelerator position detecting means (6) for detecting an accelerator position; and
engine output control means (10) for controlling an engine output in accordance with the accelerator position; and
reaction force varying means (101) for varying a reaction force of an accelerator (2) by increasing the reaction force of the accelerator (2) beyond a base reaction force when the accelerator position is equal to or larger than a prescribed position threshold value,
**characterized in that**
reaction force increase prohibiting means (10) for prohibiting an increase of the reaction force of the accelerator (2) when a prescribed condition for limiting the engine output is satisfied regardless of the accelerator position.

2. The accelerator reaction force control apparatus (100) as recited in claim 1, wherein the engine output control means (10) is configured to control a throttle position in accordance with the accelerator position; and
the reaction force increase prohibiting means (10) further prohibits the increase of the reaction force of the accelerator (2) when the prescribed condition for limiting the engine output is satisfied regardless of the accelerator position and the throttle position is smaller than a prescribed value.

3. The accelerator reaction force control apparatus (100) as recited in claim 2, wherein the reaction force increase prohibiting means (10) is configured to set the prescribed value as a position threshold value of the accelerator position at which an increased accelerator reaction force is decreased.

4. The accelerator reaction force control apparatus (100) as recited in claim 2 or 3, further comprising
a vehicle speed limiting means (18) for limiting a vehicle speed to be equal to or smaller than a prescribed vehicle speed by limiting a throttle position irrespective of an accelerator position.

## Patentansprüche

1. Beschleunigerreaktionskraft- Steuerungsvorrichtung (100), aufweisend:
eine Beschleunigerposition- Erfassungseinrichtung (6) zum Erfassen einer Beschleunigerposition; und
eine Motorausgangsleistung- Steuerungseinrichtung (10) zum Steuern einer Motorausgangsleistung in Übereinstimmung mit der Beschleunigerposition; und
eine Reaktionskraft- Variierungseinrichtung (101) zum Variieren einer Reaktionskraft eines Beschleunigers (2) durch Erhöhen der Reaktionskraft des Beschleunigers (2) über eine Basisreaktionskraft, wenn die Beschleunigerposition gleich zu oder größer als ein vorgeschriebener Positionsgrenzwert ist,
**dadurch gekennzeichnet, dass**
eine Reaktionskrafterhöhung- Verbietungseinrichtung (10) zum Verbieten einer Erhöhung der Reaktionskraft des Beschleunigers (2), wenn einer vorgeschriebenen Bedingung zum Begrenzen der Motorausgangsleistung genügt wird, unabhängig von der Beschleunigerposition.

2. Beschleunigerreaktionskraft- Steuerungsvorrichtung (100) nach Anspruch 1, wobei die Motorausgangsleistung- Steuerungseinrichtung (10) konfiguriert ist, eine Drosselposition in Übereinstimmung mit der Beschleunigerposition zu steuern; und
die Reaktionskrafterhöhung- Verbietungseinrichtung (10) außerdem die Erhöhung der Reaktionskraft des Beschleunigers (2) verbietet, wenn der vorgeschriebene Bedingung zum Begrenzen der Motorausgangsleistung genügt wird, unabhängig von der Beschleunigerposition und die Drosselposition kleiner als ein vorgeschriebener Wert ist.

3. Beschleunigerreaktionskraft- Steuerungsvorrichtung (100) nach Anspruch 2, wobei die Reaktionskrafterhöhung- Verbietungseinrichtung (10) konfiguriert ist, den vorgeschriebenen Wert als einen Positionsgrenzwert der Beschleunigerposition festzulegen, bei der eine erhöhte Beschleunigerreaktionskraft vermindert ist.

4. Beschleunigerreaktionskraft- Steuerungsvorrichtung (100) nach Anspruch 2 oder 3, außerdem aufweisend:
eine Fahrzeuggeschwindigkeitsbegrenzungseinrichtung (18) zum Begrenzen einer Fahrzeuggeschwindigkeit, um gleich zu oder kleiner als eine vorgeschriebene Fahrzeuggeschwindigkeit zu sein, durch Begrenzen einer Drosselposition unabhängig von einer Beschleunigerposition.

## Revendications

1. Dispositif de commande de la force de réaction d'un accélérateur (100) comprenant :
un moyen de détection de position d'accélérateur (6) pour détecter la position de l'accélérateur ; et
un moyen de commande de puissance de moteur (10) pour commander la puissance du moteur en fonction de la position de l'accélérateur ; et
un moyen de variation de force de réaction (101) pour faire varier la force de réaction de l'accélérateur (2) en augmentant la force de réaction de l'accélérateur (2) au-delà d'une force de réaction de base lorsque la position de l'accélérateur est supérieure ou égale à une valeur de seuil de position prescrite,
**caractérisé par**
un moyen d'interdiction d'augmentation de force de réaction (10) pour interdire l'augmentation de la force de réaction de l'accélérateur (2) lorsqu'une condition prescrite pour limiter la puissance du moteur est satisfaite, quelle que soit la position de l'accélérateur.

2. Dispositif de commande de la force de réaction d'un accélérateur (100) selon la revendication 1, dans lequel
le moyen de commande de puissance du moteur (10) est configuré pour commander la position des volets en fonction de la position de l'accélérateur ; et
le moyen d'interdiction d'augmentation de la force de réaction (10) interdit en outre l'augmentation de la force de réaction de l'accélérateur (2) lorsque la condition prescrite pour limiter la puissance du moteur est satisfaite, quelle que soit la position de l'accélérateur et la position des volets est inférieure à une valeur prescrite.

3. Dispositif de commande de la force de réaction d'un accélérateur (100) selon la revendication 2, dans lequel
le moyen d'interdiction d'augmentation de la force de réaction (10) est configuré pour régler la valeur prescrite à une valeur de seuil de position de la position de l'accélérateur à laquelle diminue la force accrue de réaction de l'accélérateur.

4. Dispositif de commande de la force de réaction d'un accélérateur (100) selon la revendication 2 ou 3, comprenant en outre
un moyen de limitation de vitesse de véhicule (18) pour limiter la vitesse du véhicule de manière à être inférieure ou égale à une vitesse de véhicule prescrite en limitant la position des volets, quelle que soit la position de l'accélérateur.
